# EUROPEAN PATENT APPLICATION

(11) **EP 2 919 235 A1**
(43) Date of publication of application: **16.09.2015**
(21) Application number: 15158480.2
(22) Date of filing: 10.03.2015
(51) Int. Cl.: G11B 27/34, G06F 3/0481

(54) **REPRODUCTION DEVICE**

(30) Priority: 12.03.2014 JP 2014049489
(71) Applicant: Funai Electric Co., Ltd., Daito-shi, Osaka 574-0013 (JP)
(72) Inventor: Fujimoto, Shojiro, Daito-shi, Osaka 574-0013 (JP)
(74) Representative: Global IP Europe Patentanwaltskanzlei

(57) **Abstract**

A reproduction device for reproducing data includes a controller and a display unit. The controller makes display titles for the data based on portions of titles other than a common part of the titles, with the common part being included between the titles. The display unit displays the display titles.

## Description

### CROSS-REFERENCE TO RELATED APPLICATIONS

This application claims priority to Japanese Patent Application No. 2014-049489 filed on March 12, 2104. The entire disclosure of Japanese Patent Application No. 2014-049489 is hereby incorporated herein by reference.

### BACKGROUND

### Field of the Invention

The present invention generally relates to a reproduction device. More specifically, the present invention relates to a reproduction device for receiving, recording, and reproducing television broadcasts.

### Background Information

When a television broadcast is received and recorded, the program title is usually stored as a file name.

If there is a set region for displaying the file name, title name and program title, there may be a problem in that the whole display will not fit if the file name to be displayed is long. Particularly with titles of programs that are broadcast regularly, the portion indicating the episode number or the portion related to the contents that comes after the program title cannot be made out in list display.

Japanese Laid-Open Patent Application Publication Nos. 2009-276466 (Patent Literature 1), 2010-009469 (Patent Literature 2), and 2007-232920 (Patent Literature 3) are known as technology for displaying long titles.

Patent Literature 1 relates to a display device, program, and display method for displaying in a single row file names and so forth made of a number of characters that exceeds the number that can be displayed in a single row, so that they can be identified without having to scroll. Patent Literature 1 discloses that truncated character strings link a starting character string composed of the first five characters (ABCDE) and an ending character string composed of the last five characters (VWXYZ) with a truncation symbol (~).

Patent Literature 2 discloses a file management device that provides file (document) management processing for understanding the gist of files in a folder in an efficient manner, without having to check the contents of each individual sub-folder or file. Patent Literature 2 discloses that a summary is displayed for any folders containing files that include query character strings, and folders are omitted.

Patent Literature 3 relates to a display system for properly displaying character information having a hierarchical structure on a display device with a narrow display area. Patent Literature 3 discloses that the "¥A folder" is abbreviated in the display as "¥A fo..." and the "¥B folder" as "¥B fo..." because of the number of characters allotted to one folder.

### SUMMARY

With what is discussed in the above-mentioned patent literature, part of a long title is omitted from the display, or a folder name with no direct relation to the title is omitted from the display, so the display is difficult to understand.

One aspect is to provide a reproduction device with which long titles can be displayed in an easy to understand way.

In view of the state of the known technology and in accordance with a first aspect of the present invention, a reproduction device for reproducing data is provided that includes a controller and a display unit. The controller is configured to make display titles for the data based on portions of titles other than a common part of the titles, with the common part being included between the titles. The display unit is configured to display the display titles.

In accordance with a preferred embodiment of the reproduction device according to the first aspect, the reproduction device is configured such that the display unit is further configured to display a group name of the data according to the common part while displaying the display titles.

In accordance with another preferred embodiment of any one of the reproduction devices mentioned above, the reproduction device is configured such that the display unit is further configured to display the display titles next to a predetermined symbol representing the common part.

In accordance with another preferred embodiment of the reproduction device according to any one of the reproduction devices mentioned above, the reproduction device further comprises a memory configured to store the display titles in association with the common part.

In accordance with another preferred embodiment according to any one of the reproduction devices mentioned above, the reproduction device further comprises a memory configured to hierarchically store the data in a folder whose folder name is the common part.

In accordance with another preferred embodiment according to any one of the reproduction devices mentioned above, the reproduction device further comprises a memory configured to hierarchically store the data in a folder whose folder name is the common part after replacing the titles with the display titles, respectively.

In accordance with another preferred embodiment according to any one of the reproduction devices mentioned above, the reproduction device is configured so that a number of hierarchical levels for hierarchically storing the data is settable while the titles have a plurality of common parts and the data is hierarchically storable with different hierarchical levels according to the plurality of common parts.

In accordance with another preferred embodiment according to any one of the reproduction devices mentioned above, the reproduction device is configured so that the display unit is further configured to display the titles that are made based on the common part and the display titles, respectively.

In accordance with another preferred embodiment according to any one of the reproduction devices mentioned above, the reproduction device is configured so that the display unit is further configured to display the titles that are made by combining the common part with the display titles, respectively.

In accordance with another preferred embodiment according to any one of the reproduction devices mentioned above, the reproduction device is configured so that the display unit is further configured to display the titles that are made based on a folder name of a folder in which the data is stored and data names of the data in the folder.

In accordance with another preferred embodiment according to any one of the reproduction devices mentioned above, the reproduction device is further configured so that the display unit is further configured to display the titles that are made by combining the folder name of the folder with the data names, respectively.

In accordance with another preferred embodiment according to any one of the reproduction devices mentioned above, the reproduction device is configured so that the display unit is further configured to display the titles that are made by canceling overlapping portions between the folder name of the folder and the data names from combinations of the folder name of the folder and the data names, respectively.

In accordance with another preferred embodiment according to any one of the reproduction devices mentioned above, the reproduction device further comprises a memory configured to store the data after replacing the titles with the display titles, respectively.

In accordance with another preferred embodiment according to any one of the reproduction devices mentioned above, the reproduction device is configured so that the controller is further configured to extract the common part from the titles after removing a predetermined symbol from the titles.

In accordance with another preferred embodiment according to any one of the reproduction devices mentioned above, the reproduction device is configured so that the display unit is further configured to display the display titles as a list.

Also other objects, features, aspects and advantages of the present disclosure will become apparent to those skilled in the art from the following detailed description, which, taken in conjunction with the annexed drawings, discloses one embodiment of the reproduction device.

### BRIEF DESCRIPTION OF THE DRAWINGS

Referring now to the attached drawings which form a part of this original disclosure:
FIG. 1 is a block diagram of a recording and reproduction device in accordance with a first embodiment;
FIG. 2 is a flowchart of a display of program titles with the recording and reproduction device;
FIG. 3 is a diagram showing an example of the display of program titles in this embodiment;
FIG. 4 is a diagram showing a comparative example of the display of program titles;
FIG. 5 is a flowchart of a display of program titles with a recording and reproduction device in accordance with a second embodiment;
FIG. 6 is a diagram showing an example of the display of program titles in this embodiment;
FIG. 7 is a flowchart of a display of program titles with a recording and reproduction device in accordance with a third embodiment;
FIG. 8 is a diagram showing an example of the display of program titles in this embodiment;
FIG. 9 is a diagram showing an example of the display of program titles in this embodiment; and
FIG. 10 is a flowchart of a display of program titles with a recording and reproduction device in accordance with a fourth embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

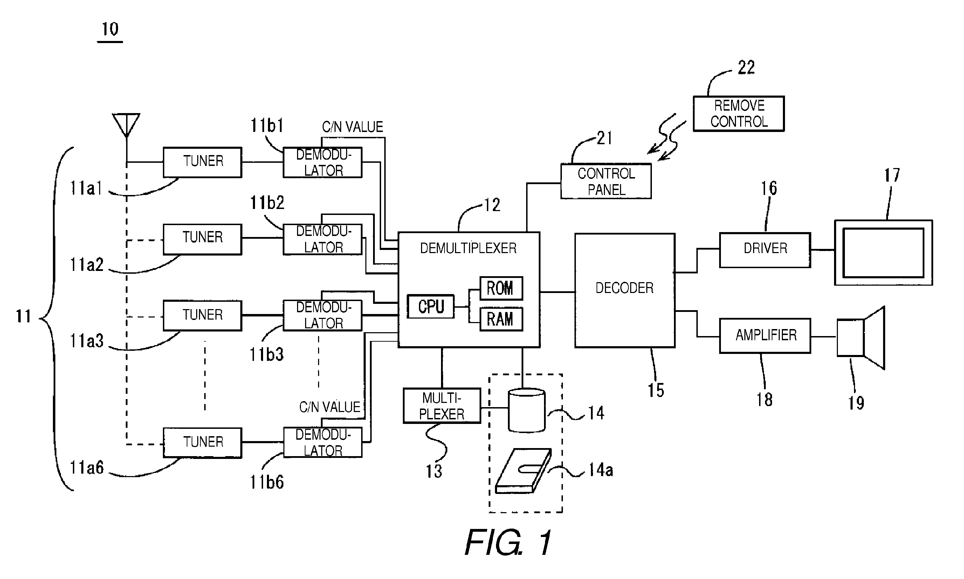

FIG. 1 is a block diagram of a recording and reproduction device 10 (e.g., a reproduction device) in accordance with a first embodiment. In the illustrated embodiment, this recording and reproduction device 10 is equipped with a display. For example, the recording and reproduction device 10 can be a television with a recording and reproduction function. However, of course, the recording and reproduction device 10 can be configured without the display. In particular, the recording and reproduction device 10 can be connected to an external display.

In FIG. 1, this recording and reproduction device 10 includes a plurality of (six in FIG. 1) tuners 11 (i.e., digital tuners 11a1, 11 a2, 11a3, ..., and 11a6). The tuners 11 have the functions of a digital terrestrial tuner, a BS tuner, and a CS tuner. Therefore, a plurality of (six in this embodiment) different television broadcasts can be received at the same time.

The IF output of the tuners 11a1 to 11a6 is inputted to demodulators 11 b1 to 11 b6 (i.e., demodulators 11b1, 11b2, 11b3, ..., and 11b6). The demodulators 11 b1 to 11 b6 demodulate the IF output, and the demodulated signals that have undergone error processing are individually inputted to a demultiplexer 12. The demodulators 11 b1 to 11 b6 can acquire individual C/N values for the tuners 11a1 to 11a6 in the process of obtaining demodulated signals, and the C/N values are also outputted to the demultiplexer 12.

The demultiplexer 12 separates multiplexed signals, but also executes specific programs with a built-in CPU (Central Processing Unit) (e.g., controller), ROM (Read Only Memory), or RAM (Random Access Memory), controls the various components, and can receive, record, and reproduce television broadcasts. This display is outputted to a decoder 15 (discussed below) as an OSD (on-screen display). In the illustrated embodiment, the demultiplexer 12 can include a microcomputer or processor with a control program that controls the various components of the recording and reproduction device 10. The demultiplexer 12 can also include other conventional components such as an input interface circuit, an output interface circuit, and storage devices such as a ROM and a RAM. The microcomputer is programmed to control the various components. The internal RAM stores statuses of operational flags and various control data. The internal ROM stores the programs for various operations. The demultiplexer 12 is capable of selectively controlling any of the components in accordance with the control program. It will be apparent to those skilled in the art from this disclosure that the precise structure and algorithms for the demultiplexer 12 can be any combination of hardware and software that will carry out the functions of the present invention. Also, in the illustrated embodiment, the demultiplexer 12 includes the CPU to control the various components. However, of course, the recording and reproduction device 10 can include a CPU separate from the demultiplexer 12.

During recording, a multiplexer 13 extracts and remultiplexes data required for recording, from the content of a received television broadcast, and records this to a HDD 14 serving as a recording region. During reproduction, the demultiplexer 12 reads data directly from the HDD 14 (e.g., the memory). In addition to being able to record the content of a digital broadcast, the HDD 14 also stores combinations of simultaneously received channels, information about reception frequencies, and so forth (discussed below). This information can also be kept in a memory region provided outside the HDD 14. Instead of the HDD 14, or along with the HDD 14, an external HDD, a Blu-ray disc drive 14a capable of changing recording media, or the like may be provided.

The transport stream of a received digital broadcast, or data read from the HDD 14 is inputted to the decoder 15, separated into a video signal and an audio signal, and decoded. The decoded video signal is inputted to a driver 16 and displayed as video on a display panel 17 (e.g., a display unit). The decoded audio signal is amplified by an amplifier 18 and outputted as audio from a speaker 19. The decoder 15 also inputs data for various kinds of OSD produced by the CPU of the demultiplexer 12, superposes the data on the decoded video signal, and outputs the result to the driver 16.

Operational commands to the recording and reproduction device 10 are acquired by the demultiplexer 12 via a control panel 21, and are reflected in specific control. Also, operational commands can be similarly acquired via a remote control 22.

In this embodiment, the HDD 14 corresponds to the memory region in which a hierarchical structure is possible, and stores recorded programs as data, with the shared portions (e.g., the common parts) in the names thereof (e.g., the titles) as hierarchically structured folder names. The CPU of the demultiplexer 12 displays program titles according to a processing procedure (discussed below). Thus, in the illustrated embodiment, the CPU of the demultiplexer 12 corresponds to the name acquisition means, the hierarchical structure acquisition means, and the program title display means for each control.

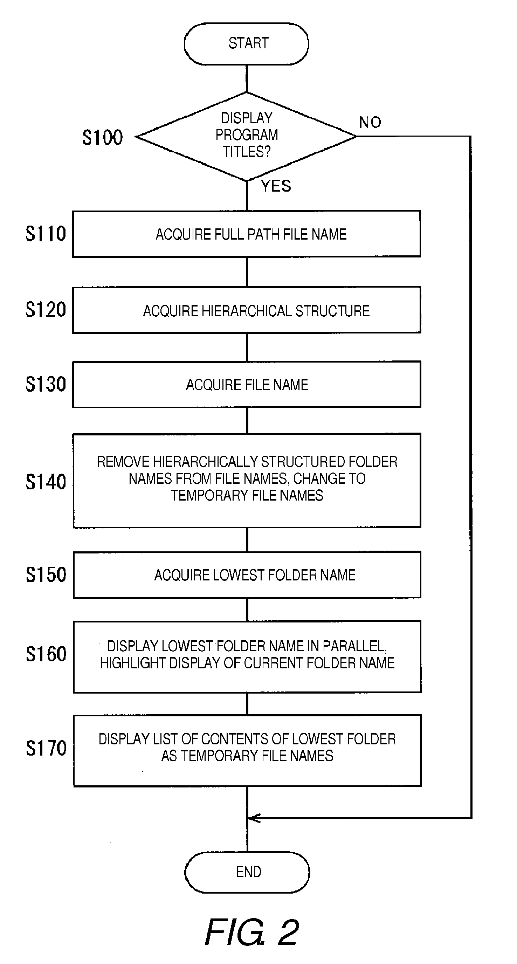

FIG. 2 is a flowchart of the processing procedure of the display of program titles with the recording and reproduction device 10.

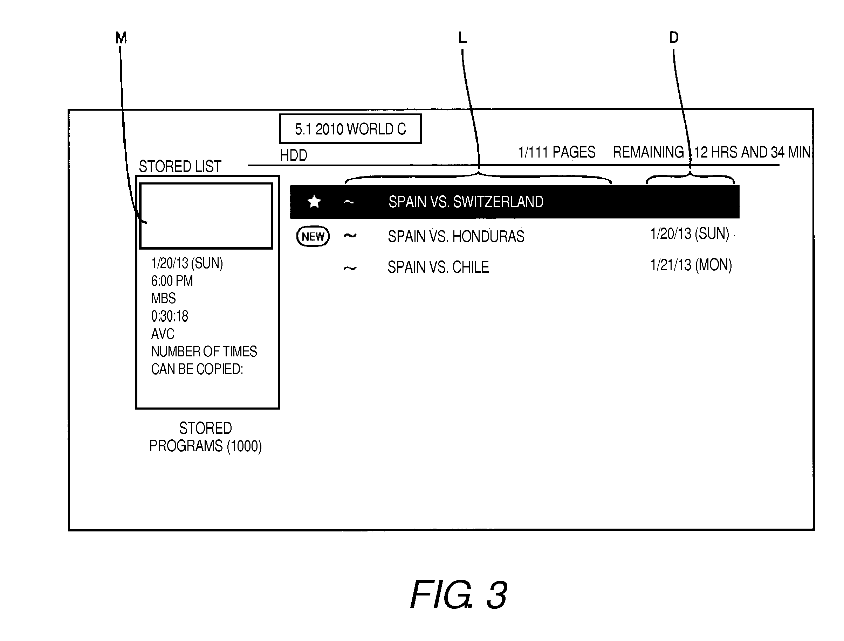

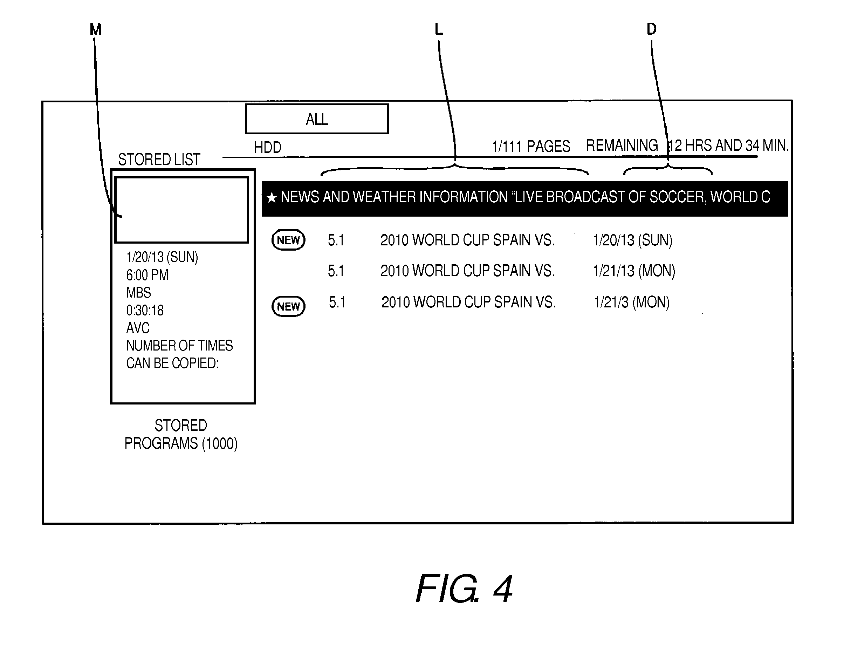

FIG. 3 is a diagram showing an example of the display of program titles in this embodiment. FIG. 4 is a diagram showing a comparative example of the display of program titles.

In the comparative example shown in FIG. 4, a program title display column L (list display) displays the following.

| |
|---|
| 5.1 2010 World Cup Spain vs. |
| 5.1 2010 World Cup Spain vs. |
| 5.1 2010 World Cup Spain vs. |

Because the program title is so long, it cannot completely fit in the program title display column L. Although the user wants to search for the "5.1 2010 World Cup Spain vs. Honduras" match, it cannot be selected like this. If the highlighted display is moved one program at a time, the user will be able to use up to the recording date display list D, and the "Honduras" part that had been hidden will be displayed. Naturally, if the program title is even longer, it cannot be displayed even by using the recording date display list D. In the example in FIG. 4, the highlighted display has moved onto the program title at the top, and the program title of "News and weather information, Live broadcast of soccer, World C" is displayed.

Meanwhile, in the display example of this embodiment shown in FIG. 3, the program title display column L displays the following.

| | |
|---|---|
| ☆ | ∼ Spain vs. Switzerland |
| NEW | ∼ Spain vs. Honduras |
| | ∼ Spain vs. Chile |

The highlighted display is moved to the program title at the top. Details about the program that is highlighted are displayed in a detail display column M.

At the very top is displayed "5.1 2010 World C." The "5.1 2010 World C" here is a hierarchically structured memory region, and is part of the folder name at the hierarchical level that is currently selected. In this example, it is shown that there is a folder whose name starts with at least "5.1 2010 World C," and in this folder is stored data about the above-mentioned three program titles. Specifically, as the folder name, shared portions (e.g., common parts) of the original program titles (e.g., the data names or the titles) are assigned, and the portions where the (hierarchically structured) folder name portion is overlapped with the original program titles (data names or the titles) are omitted from the display. In the illustrated embodiment, the length of the folder name is limited up to twenty characters, while the length of the displayed folder name is limited up to seventeen characters. Thus, "5.1 2010 World C", which is a part of the folder name "5.1 2010 World Cup ", is displayed at the very top of the screen, as shown in FIG. 3. Also, the remainders of the original program titles after omitting the overlapping portions (i.e., the folder name) from the original program titles are displayed in the program title display column L, as shown in FIG. 3. However, of course, the length of the folder name or the length of the displayed folder name are settable to different values, or the entire overlapping portion of the original program titles can be set to the folder name and the displayed folder name without setting a limit to the length of the characters. Also, extraction of the common parts between the characters can be performed in a conventionally well-known manner. Thus, the detailed description of the extraction of the shared portions from the original program titles will be omitted for the sake of brevity.

This processing procedure will now be described.

The CPU of the demultiplexer 12 controls the various components by the following processing procedure. First, in step S100, the CPU determines whether there is a program title display. Basically, the following processing is carried out at the point when a program title display becomes necessary. If the CPU determines that the program title display is not necessary (No in step S100), then the processing ends. On the other hand, if the CPU determines that the program title display is necessary (Yes in step S100), then, in step S110, the full path file names are acquired. The data is stored in a hierarchical structure in the HDD 14, and the CPU accesses the HDD 14 to acquire the full paths of the file names for the data that is stored in the hierarchical structure. The term "full path" here refers to the entire path of the hierarchical structure related to divided program titles when program titles are stored after being divided into the hierarchical structure as indicated below. Therefore, a hierarchical structure that is higher than the hierarchical structure in this sense, such as a path to the directory containing the file names of the data from the root directory of the file system, may or may not be included in the hierarchical structure in this sense.

In step S120, the CPU acquires the hierarchical structure. Just as previously described, this hierarchical structure includes the entire path of the hierarchical structure related to the divided program titles when the program titles are stored after being divided into the hierarchical structure as indicated below. The processing in this step S120 corresponds to a hierarchical structure acquisition means for acquiring the hierarchical structure of the memory region.

In step S130, the CPU acquires the file names. These file names refer to the file names stored in the lowest folder or directory of the hierarchical structure. As discussed below, the shared portions of the file names are used for the hierarchically structured folder name, but the portions used for the hierarchically structured folder name may be either removed from the file names, or left in place. The processing in step S130 corresponds to the name acquisition means for acquiring the data names stored in the memory region.

Accordingly, in step S140 the CPU removes the hierarchically structured folder name from these file names, and stores the result as temporary file names (e.g., display titles). In step S150 the lowest folder name is acquired, and in step S160 this lowest folder name is displayed next to the region at the very top, as shown in FIG. 3. FIG. 3 illustrates a case in which there is only one lowest folder (i.e., "5.1 2010 World Cup "). However, if there are more than one lowest folder, then the current folder name is highlighted in the display. After this, in step S170 the CPU displays the contents of the lowest folder as a list of temporary file names in the program title display column L (list display). In step S140, the hierarchically structured folder name is removed from the file names of the data, respectively. Therefore, in the list display of the program titles, the portions of the original program titles (data names) in which the (hierarchically structured) folder name is overlapped with the original program titles (data names) are omitted from the display. The processing of step S140 and step S170 corresponds to a program title display means for displaying so that at least the hierarchically structured folder names and data names are not overlapped when a list of the data names is displayed.

Although not discussed in detail here, in the example shown in FIG. 3, a symbol "∼" (e.g., a predetermined symbol) is added in front of temporary file names. This will be discussed below.

### SECOND EMBODIMENT

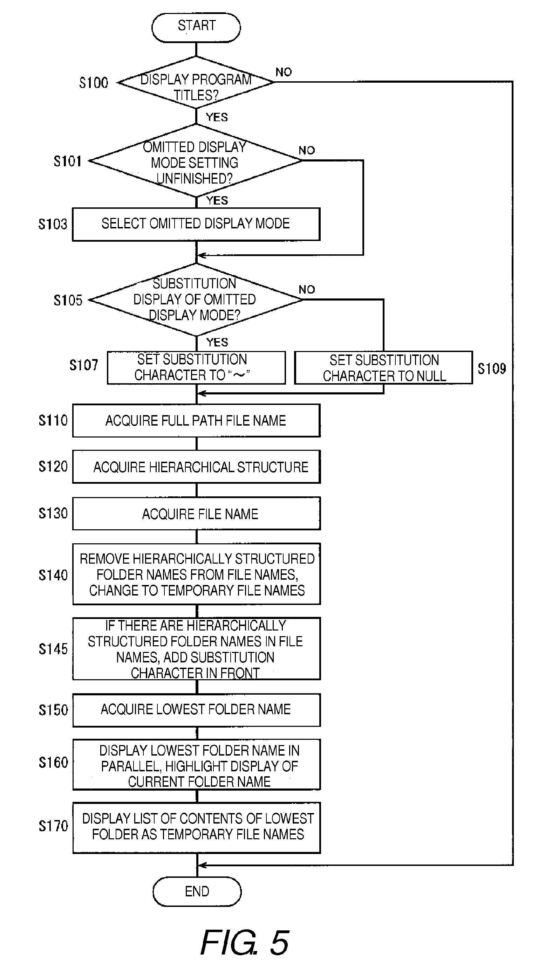

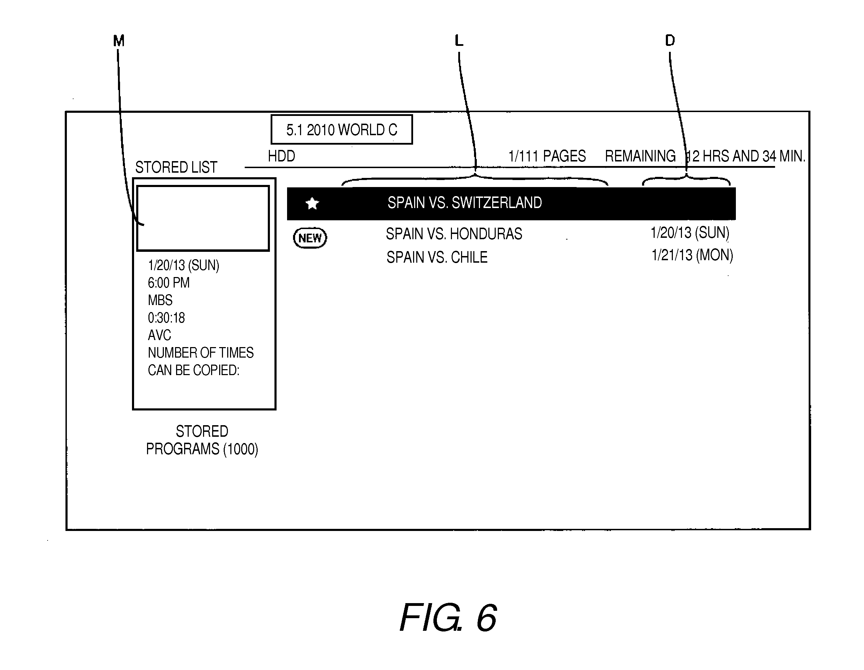

Referring now to FIGS. 5 and 6, a recording and reproduction device 10 in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

FIG. 5 is a flowchart of the processing procedure of the display of program titles with the recording and reproduction device 10 in accordance with the second embodiment, and FIG. 6 is a diagram showing an example of the display of program titles in this embodiment.

As shown in FIG. 3, in the first embodiment, the symbol "∼" (e.g., the predetermined symbol) is attached at the front when the temporary file names are displayed as a list in the program title display column L (list display). This is not only for indicating that the original program titles include the portions displayed in the program title display column L (list display), but also for intentionally indicating that the characters at the front have been omitted from the display. However, this can also be understood from the display of the folder name at the very top. Therefore, in the second embodiment, the selection thereof is left up to the user. The same step numbers are used for processing that is the same as in the first embodiment.

As shown in FIG. 5, if the CPU of the demultiplexer 12 (see FIG. 1) determines that there is a program title display in step S100 (Yes in step S100), then it determines in step S101 whether omitted display mode setting is unfinished. On the other hand, if the CPU determines that the program title display is not necessary in step S100 (No in step S100), then the processing ends. The omitted display mode is set to hold user selections for whether to add the symbol "∼" at the front as discussed above, or whether the program title display column L can be effectively utilized to display as many characters as possible without adding anything at the front. Adding the symbol "∼" indicates that there is a shared portion with the folder name in addition to the name being displayed.

At the outset, the omitted display mode setting is unfinished. Thus, the procedure goes through the determination of step S101 (Yes in step S101), and then step S103 is carried out to select the omitted display mode. This prompts a selection by giving a pop-up display on the screen, such as an OSD. An example of this pop-up display is a display of "Will "∼" be added in front of the program title? (Yes 1 / No 2)." In response, the user presses the "1" key for yes and the "2" key for no to input the selection result on the remote control 22. In this case, the addition is called a "substitution display."

The CPU obtains this selection result, and in step S105 determines whether the omission display mode will show "substitution display" based on the selection result. If it is determined to show this (i.e., "1" key has been pressed) (Yes in step S105), then in step S107 a variable called a substitution character is set to the symbol "∼". On the other hand, if it is determined not to show this (i.e., "2" key has been pressed) (No in step S105), then in step S109 the variable called a substitution character is set to null. Null indicates that it corresponds to no character.

At the outset, the variable called a substitution character is set to either "∼" or null as mentioned above, but once it is set, thereafter setting will be determined to be finished in step S101 (No in step S101), so this is not repeated. Naturally, the configuration may be such that resetting can be performed on a setting menu or the like.

After this, the processing steps S110 to S140 is carried out to acquire the lowest folder name and the temporary file name for each of the program titles. Then, in step S145, if there is a hierarchically structured folder name in the file name, then the substitution character is added in front of the temporary file name. Then, in steps S150 to S170, the temporary file name added at the front of the substitution character is displayed in the program title display column L. Since the substitution character is either "∼" or null, one or the other is added at the front. The symbol "∼" takes up the space of one character, but null is treated as if there is no data, and takes up no space at all.

In the display example of the embodiment shown in FIG. 6, the following is displayed in the program title display column L (list display).

| | |
|---|---|
| ☆ | Spain vs. Switzerland |
| NEW | Spain vs. Honduras |
| | Spain vs. Chile |

With this embodiment, in addition to the list display of the program titles omitting the portions in which the (hierarchically structured) folder name is overlapped with the original program titles (data names) from the original title, the user can select whether or not to attach some kind of symbol indicating that there is an omission.

### THIRD EMBODIMENT

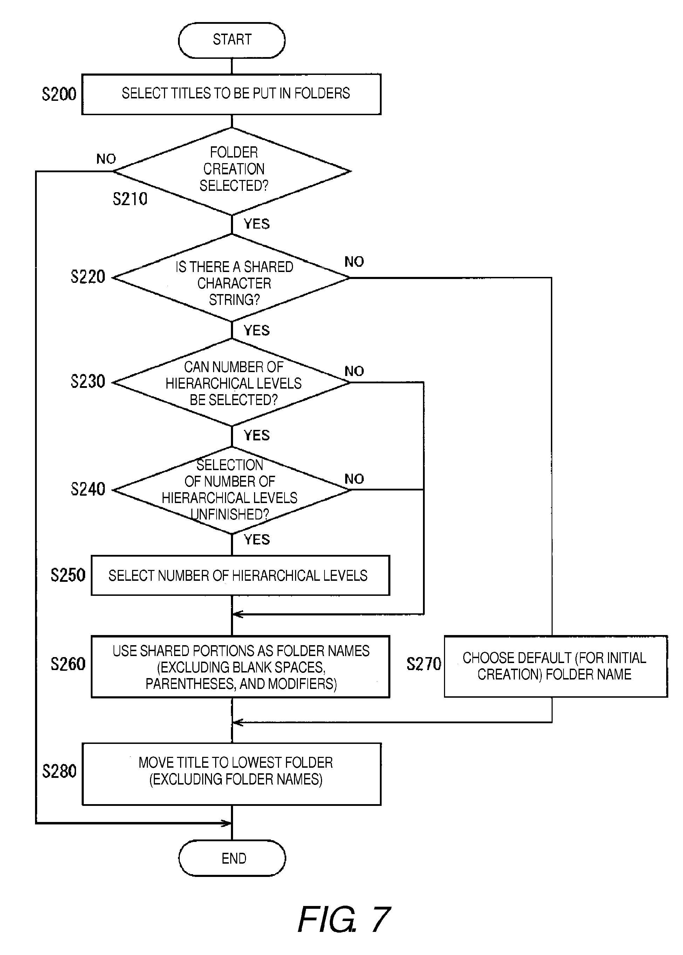

Referring now to FIGS. 7 to 9, a recording and reproduction device 10 in accordance with a third embodiment will now be explained. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

In the above-mentioned embodiments, the shared portions of the data names are hierarchically structured as the folder names with the hierarchical structure. In this embodiment, the processing procedure for this hierarchical structuring (corresponds to a hierarchical structuring means) will be further described.

FIG. 7 is a flowchart of the processing procedure of the display of program titles with the recording and reproduction device 10 in accordance with the third embodiment.

As shown in FIG. 7, in step S200, the CPU of the demultiplexer 12 (see FIG. 1) selects titles to be put in folders. In a state in which there is no hierarchical structuring, all of the program titles are displayed in the program title display column L, for example.

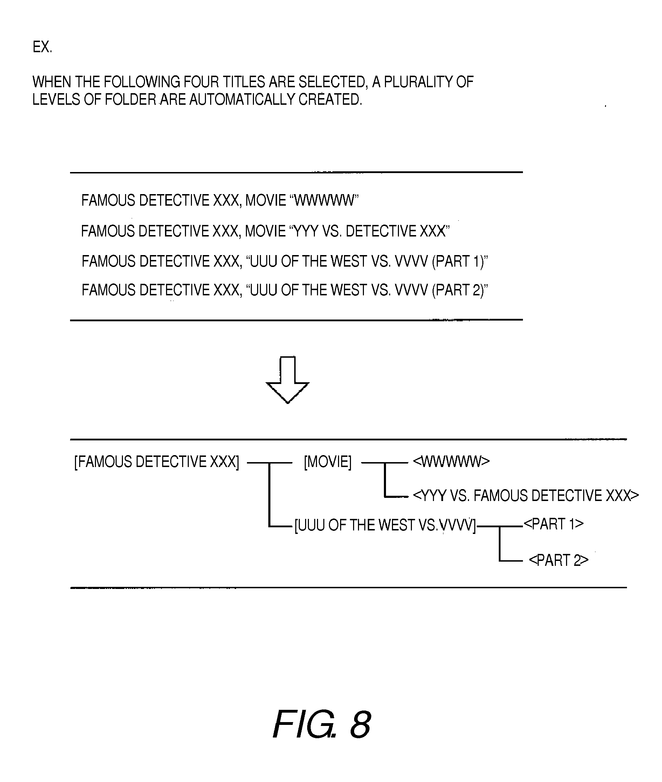

FIG. 8 is a diagram showing an example of the display of program titles in this embodiment. As an example, the following four data names are used, as shown in FIG. 8.

| |
|---|
| Famous Detective XXX, movie "WWWWW" |
| Famous Detective XXX, movie "YYY vs. Famous Detective XXX" |
| Famous Detective XXX, "UUU of the West vs. VVVV (part 1)" |
| Famous Detective XXX, "UUU of the West vs. VVVV (part 2)" |

When these are selected, the following hierarchical structuring is performed by putting the shared portions into hierarchically structured folder names.

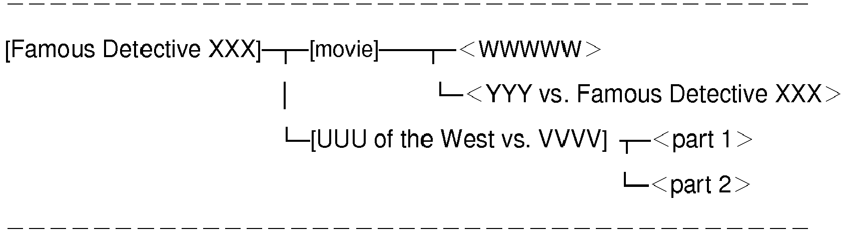

In this example, the "Famous Detective XXX" is a shared portion for four sets of data, and is the folder name at the highest level. Next, "movie" is a shared portion for the top two sets of data, while "UUU of the West vs. VVVV" is a shared portion for the bottom two sets of data. Thus, they each take a folder name of a lower hierarchical level. After these there are no shared portions. Thus, there is no hierarchical structuring, and the remaining portion is added as the data name in each case.

To achieve the above result, after the CPU in step S200 determines that titles to be put in folders have been selected, then in step S210 it determines whether folder creation has been selected. In the illustrated embodiment, various types of processing are readied for the selected titles. In step S210, it is determined whether the folder creation, which is one of these processing types, has been selected by the user. If the CPU determines that the folder creation is not selected (No in step S210), then the processing ends. On the other hand, if it is determined that the folder creation is selected (Yes in step S210), then since both conditions (i.e., the plurality of titles are selected and the folder creation is selected) are met, in step S220 it is determined whether there is a shared character string between the selected titles. In the example shown in FIG. 8, it is determined that "Famous Detective XXX," "movie," and "UUU of the West vs. VVVV" correspond to the shared portions.

If it is determined that there is a shared character string between the selected titles (Yes in step S220), then in step S230, it is determined whether the number of hierarchical levels can be selected. The number of hierarchical levels that can be selected is one option, and is an option to preselect whether or not the user likes fine classification or hierarchization. First, upon thus determining whether selection is possible (Yes in step S230), if selection is indeed possible, in step S240 the CPU determines whether selection of the number of hierarchical levels is unfinished. If it is unfinished (Yes in step S240), then in step S250 the number of hierarchical levels is selected, and the process proceeds to step S260. More specifically, selection is prompted by putting a pop-up display on the screen, such as an OSD. An example of a pop-up display is a display of "Set upper limit to number of hierarchical levels in processing for automatic hierarchical structuring? (Yes 1 to 4 / No 0). The user presses a number key on the remote control 22 if the upper limit to the number of hierarchical levels is to be set within the range of 1 to 4, and the "0" key for no to input the selection result. In this manner, the shared portions in the data names are analyzed. In this manner, when there are a plurality of hierarchical levels that can be structured, the user is prompted to select the number of hierarchical levels. Then, the selection result is acquired, and the data is put into the hierarchical structure in the acquired number of hierarchical levels, and stored. On the other hand, if it is determined that the number of hierarchical levels cannot be selected (No in step S230), or that the selection of the number of hierarchical levels is not unfinished (No in step S240), then the process proceeds to step S260.

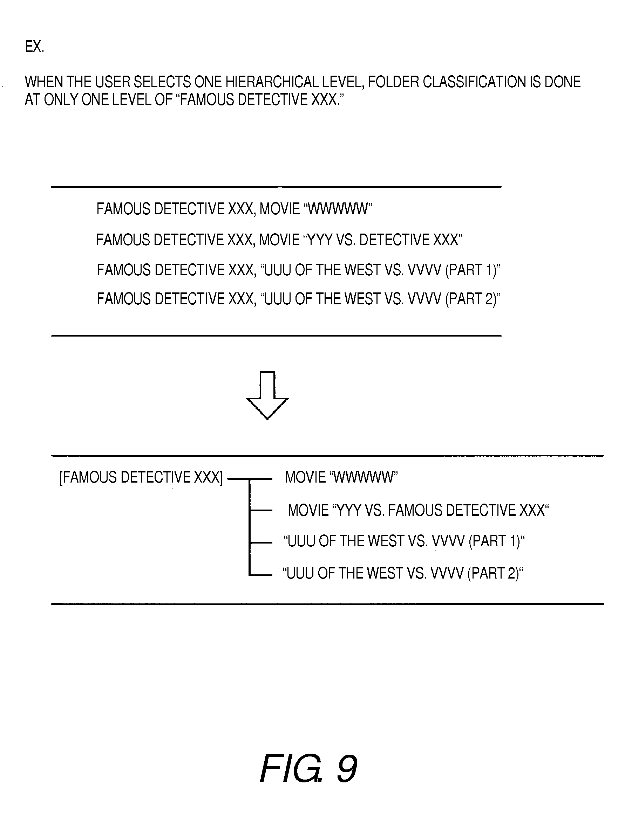

FIG. 9 is a diagram showing an example of the display of program titles in this embodiment. FIG. 9 shows an example of hierarchical structuring when the upper limit to the number of hierarchical levels has been set to 1. Just as shown in FIG. 8, the display is as follows when there are four data names.

| |
|---|
| Famous Detective XXX, movie "WWWWW" |
| Famous Detective XXX, movie "YYY vs. Famous Detective XXX" |
| Famous Detective XXX, "UUU of the West vs. VVVV (part 1)" |
| Famous Detective XXX, "UUU of the West vs. VVVV (part 2)" |

When these titles are selected, the following hierarchical structuring is realized by putting the shared portions into one hierarchically structured folder name.

| | |
|---|---|
| [Famous Detective XXX] | ┬<movie "WWWWW"> |
| | ├<movie "YYY vs. Famous Detective XXX"> |
| | ├<"UUU of the West vs. VVVV (part 1)"> |
| | └<"UUU of the West vs. VVVV (part 2)"> |

The shared portions correspond to "Famous Detective XXX," "movie," and "UUU of the West vs. VVVV," but the upper limit to the number of hierarchical levels is 1, so just the highest shared portion is used as the one hierarchically structured folder name, and all the rest is used as the program names or display names. The shared portions are allotted as folder names from the highest down to the lowest, at the upper limit to the number of hierarchical levels.

Furthermore, in step S260 the CPU creates the hierarchical structure using the shared portions as the folder names within the range of the upper limit to the number of hierarchical levels set in step S230.

One selection option here is to exclude blank spaces, parentheses, and classification symbols (modifiers) from the folder names. These are also called generic classification symbols and letters, which is used to refer collectively to anything that is not a data name itself.

The reason for the exclusion is that blank spaces are used for separating words, and do not substantially express a name. Also, parentheses (including brackets and braces) are also used for the purpose of separation, and so the same applies to them. Alternatively, in the illustrated embodiment, data within the brackets or parentheses can be integrally processed with the brackets or the parentheses. Thus, even though "UUU of the West vs. VVVV (part" is common for the bottom two sets of data, only "UUU of the West vs. VVVV" is extracted as the shared portion for the bottom two sets of data shown in FIG. 8. However, of course, which marks, symbols, or punctuations are integrally processed with the data therewithin is settable as desired and/or needed. Also, in the illustrated embodiment, quotation marks can be ignored while extracting the shared portions. However, of course, which marks, symbols, or punctuations are ignored while extracting the shared portions are settable as desired and/or needed.

Modifiers used in program titles include, for example, "end," "sub," "DB," and "bi," which stand for the last episode, closed captions or subtitles, data broadcast, and bilingual. These are not names, but rather additional information related to the data content, and have no intentional meaning that is utilized in classifying names. Also, since the added portion is no unambiguous, there is also a negative reason in that the data may end up being treated as something else if added in a different place. Therefore, there are users who prefer these to be removed, and this is done to please such users. Of course, which modifiers are ignored while extracting the shared portions is settable as desired and/or needed. Thus, modifiers other than the above-mentioned modifiers can be ignored while extracting the shared portions.

On the other hand, it is determined that there is no shared character string between the selected titles (No in step S220), then the process proceeds step S270. Because there will sometimes be no shared portions, in step S270 the CPU chooses a default (for initial creation) folder name. For instance, folders may be created with names such as folder 1, folder 2, and so on.

When there are shared portions, as discussed above, after unnecessary modifiers or restrictions on the number of hierarchical levels have been removed, hierarchical structuring is performed. Then in step S280 the title (data) is moved to the lowest folder. If there is no shared portion, the data is moved to a folder with a default folder name. In this case, since a shared portion is used as a folder name, the data name can also be changed to one from which shared portions have been removed (from which the folder name has been removed. Meanwhile, since there are some users who prefer not to change the data names, they may be given the option of selecting whether or not to remove folder names on a setting menu.

### FOURTH EMBODIMENT

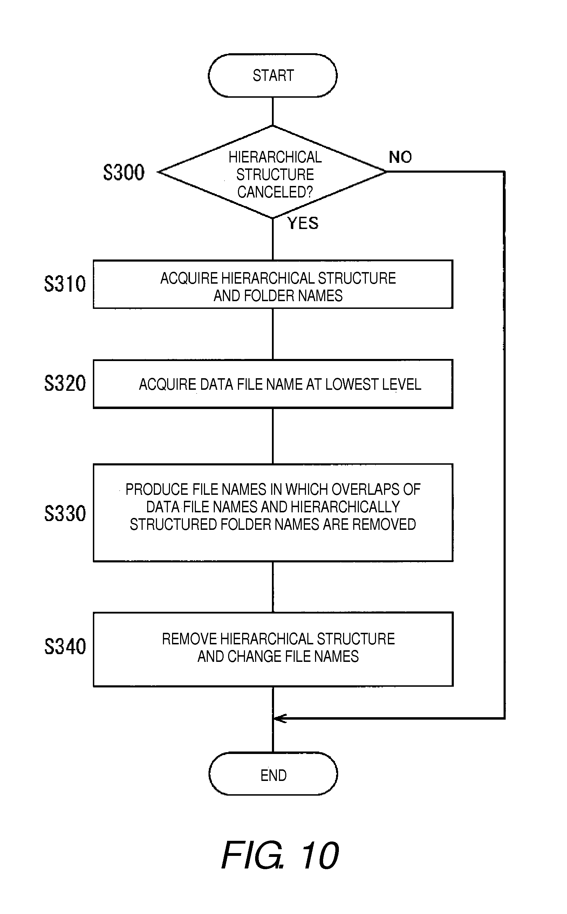

Referring now to FIG. 10, a recording and reproduction device 10 in accordance with a fourth embodiment will now be explained. In view of the similarity between the first and fourth embodiments, the parts of the fourth embodiment that are identical to the parts of the first embodiment will be given the same reference numerals as the parts of the first embodiment. Moreover, the descriptions of the parts of the fourth embodiment that are identical to the parts of the first embodiment may be omitted for the sake of brevity.

Just as there are situations when it is preferable to perform hierarchical structuring, there are also situations when it is preferable to return the hierarchical structuring to what it was before, the procedure for which will now be described.

FIG. 10 is a flowchart of the processing procedure of the display of program titles with the recording and reproduction device 10 in accordance with the fourth embodiment.

In step S300, if the CPU of the demultiplexer 12 (see FIG. 1) determines that the user has selected to cancel the hierarchical structure (Yes in step S300), then first, in step S310, the hierarchical structure and the folder names are acquired. Then, in step S320, the file names for the data at the lowest level are acquired. Next, in step S330, file names from which the overlap of the file names and the hierarchically structured folder names has been removed are produced based on these acquired folder names and file names. As discussed above, there are situations when the folder names are not removed from the file names of data after hierarchical structuring, and there are also situations when these are removed. If they are removed, then the folder names should be linked from the top level and added to the front of the file names. If they are not removed, this will end up resulting in overlap, so the file names are produced from which the overlap of the hierarchically structured folders and the file names of data has been removed. Also, if they have not been removed, then the original program titles will remain, so they may be used without any process. After this, in step S340 the CPU removes the hierarchical structure and changes the data file names stored at the lowest level to what is mentioned above. On the other hand, if the CPU determines that the user has not selected to cancel the hierarchical structure (No in step S300), then the process ends.

Doing this allows a hierarchical structure to be applied or to be canceled to display either the original program titles of the data or the shortened file name of the data with the display panel 17.

It should go without saying that the present invention is not limited to or by these embodiments. It should also be obvious to a person skilled in the art that the following are all disclosed as embodiments of the present invention.
▪ The mutually interchangeable members, components, and so forth disclosed in the above embodiments may be suitably combined and changed around.
▪ While not disclosed in the above embodiments, the mutually interchangeable members, components, and so forth disclosed in the above embodiments that are prior art may be suitably substituted, and the combinations thereof may be changed around.
▪ While not disclosed in the above embodiments, any members, components, and so forth that can be conceived by a person skilled in the art as alternatives to the members, components, and so forth disclosed in the above embodiments based on prior art and so forth may be suitably substituted, and the combinations thereof may be changed around.

In the illustrated embodiments, the recording and reproduction device 10 (e.g., the reproduction device) for reproducing the data includes the CPU of the demultiplexer 12 (e.g., the controller) and the display panel 17 (e.g., the display unit). The CPU (e.g., the controller) is configured to make or generate the temporary file names (e.g., the display titles) for the data based on portions of the original program titles (e.g., titles) of the data other than the shared portion (e.g., the common part) of the original program titles (e.g., the titles) of the data, with the shared portion (e.g., the common part) being included between the original program titles (e.g., the titles). For example, the shared portion (e.g., the common part) is commonly included between the original program titles (e.g., the titles). The display panel 17 (e.g., the display unit) is configured to display the temporary file names (e.g., the display titles), as shown in FIGS. 3 and 6.

In the illustrated embodiments, as shown in FIGS. 3 and 6, the display panel 17 (e.g., the display unit) is further configured to display the part of the folder name at the very top (e.g., the group name of the data) according to the shared portion (e.g., the common part) while displaying the temporary file names (e.g., the display titles).

In the illustrated embodiments, as shown in FIGS. 3 and 6, the display panel 17 (e.g., the display unit) is further configured to display the temporary file names (e.g., the display titles) next to the symbol "∼" (e.g., the predetermined symbol) representing the shared portion (e.g., the common part).

In the illustrated embodiments, the recording and reproduction device 10 (e.g., the reproduction device) further includes the HDD 14 (e.g., the memory) configured to store the temporary file names (e.g., the display titles) in association with the shared portion or the folder name (e.g., the common part).

In the illustrated embodiments, the recording and reproduction device 10 (e.g., the reproduction device) further includes the HDD 14 (e.g., the memory) configured to hierarchically store the data in a folder whose folder name is the shared portion (e.g., the common part).

In the illustrated embodiments, the recording and reproduction device 10 (e.g., the reproduction device) further includes the HDD 14 (e.g., the memory) configured to hierarchically store the data in a folder whose folder name is the shared portion (e.g., the common part) after replacing the original program titles or the file names (e.g., the titles) with the temporary file names (e.g., the display titles), respectively.

In the illustrated embodiments, as shown in FIGS. 7-9, a number of hierarchical levels for hierarchically storing the data is settable while the original program titles (e.g., the titles) have a plurality of shared portions (e.g., common parts) and the data is hierarchically storable with different hierarchical levels according to the plurality of shared portions (e.g., common parts).

In the illustrated embodiments, as shown in FIG. 10, the display panel 17 (e.g., the display unit) is further configured to display the original program titles (e.g., the titles) that are made based on the shared portion (e.g., the common part) and the file names (e.g., the display titles), respectively.

In the illustrated embodiments, as shown in FIG. 10, the display panel 17 (e.g., the display unit) is further configured to display the original program titles (e.g., the titles) that are made by combining the shared portion (e.g., the common part) with the file names (e.g., the display titles), respectively.

In the illustrated embodiments, as shown in FIG. 10, the display panel 17 (e.g., the display unit) is further configured to display the original program titles (e.g., the titles) that are made based on the folder name of the folder in which the data is stored and file names (e.g., the data names) of the data in the folder.

In the illustrated embodiments, as shown in FIG. 10, the display panel 17 (e.g., the display unit) is further configured to display the original program titles

(e.g., the titles) that are made by combining the folder name of the folder with the file names (e.g., the data names), respectively.

In the illustrated embodiments, as shown in FIG. 10, the display panel 17 (e.g., the display unit) is further configured to display the original program titles (e.g., the titles) that are made by canceling overlapping portions between the folder name of the folder and the file names (e.g., the data names) from combinations of the folder name of the folder and the file names (e.g., the data names), respectively.

In the illustrated embodiments, as shown in FIGS. 2, 5 and 7, the recording and reproduction device 10 (e.g., the reproduction device) further includes the HDD 14 (e.g., the memory) configured to store the data after replacing the original program titles (e.g., the titles) with temporary file names (e.g., the display titles), respectively.

In the illustrated embodiments, as shown in FIG. 7, the CPU of the demultiplexer 12 (e.g., the controller) is further configured to extract the shared portion (e.g., the common part) from the original program titles (e.g., the titles) after removing blank spacers, parentheses, brackets, braces, modifiers, and the like (e.g., the predetermined symbols) from the original program titles (e.g., the titles).

In the illustrated embodiments, as shown in FIGS. 3 and 6, the display panel 17 (e.g., the display unit) is further configured to display the temporary file names (e.g., the display titles) as a list.

The present invention is a reproduction device capable of reproducing data stored in a memory region in which a hierarchical structure is possible, wherein the memory region stores the data such that shared portions in the names of the data are used as the folder names of the hierarchical structure, the reproduction device comprising a name acquisition means for acquiring the names of the data stored in the memory region, a hierarchical structure acquisition means for acquiring the hierarchical structure of the memory region, and a program title display means for displaying so that there is no overlap of at least the hierarchically structured folder names and data names when the data names are displayed in a list.

With this configuration, in the memory region, the data is stored such that shared portions in the names of the data are used as hierarchically structured folder names. On this premise, the name acquisition means acquires the names of the data stored in the memory region, and the hierarchical structure acquisition means acquires the hierarchical structure of the memory region. The program title display means then displays so that there is no overlap of at least the hierarchically structured folder names and data names when the data names are displayed in a list.

Therefore, if all the folder names and data names are displayed, then all of the data names will be displayed. If the shared portions are unnecessary, then just the remaining portions are displayed. Just the required shared portions may be displayed out of a plurality of hierarchical structures. Even if a data name includes a shared portion, that portion will not be displayed redundantly, so there is no wasted display area.

In another mode of the present invention, the program title display means may be configured to display shared portions, if there are shared portions, by the presence or absence of specific letters or symbols.

If no shared portions are displayed, it is impossible to tell whether or not there are shared portions. With the above configuration, when there are shared portions, they are displayed by the presence or absence of specific letters or symbols, so it is easy to tell by comparison to when there are no specific letters or symbols.

In another mode of the present invention, the configuration may comprise a hierarchical structuring means for analyzing the shared portions in the data names in the memory region, forming the hierarchical structure using the shared portions as the folder names, and storing the data at a specific hierarchical level.

With this configuration, the shared portions in data names are analyzed, a hierarchical structure is formed using the shared portions as the folder names, and the data is stored at a specific hierarchical level. For example, if there are a plurality of sets of data having the shared portions in their names, then the shared portions are analyzed and put into the hierarchical structure, so that the data is stored in folders with names of the shared portions, allowing the data to be organized.

In another mode of the present invention, the hierarchical structuring means analyzes the shared portions of the data names, and if there are a plurality of hierarchical levels that can be structured, prompts the user to select a number of hierarchical levels to acquire a selection result, and hierarchically classifies and stores the data in the acquired number of hierarchical levels.

If there is a plurality of elements in how a title is assigned, there will be a plurality of classification possibilities based on the shared portions, and usually it is up to the user to decide whether or not there is a need to classify all of these. In such cases, with the above configuration, the user is prompted to select the number of hierarchical levels to acquire the selection result, and this result is then reflected.

In another mode of the present invention, the hierarchical structuring means may be configured so that it can return to a state of no hierarchical structure based on the hierarchical structure and the data names.

If the shared portions are used to create the folder names, it is possible to eliminate a portion of the folder name from the file name for the data. The reverse is also possible, however, and a state of no hierarchical structure can be returned to the hierarchical structure and the data names.

In another mode of the present invention, the hierarchical structuring means can exclude the folder names from the data names after hierarchical classification, and can also leave the folder names in the data names.

With this configuration, because it is possible to exclude the folder names from the data names after hierarchical classification, and to leave the folder names in the data names, either one can be selected, which improves user convenience.

In another mode of the present invention, the configuration may be such that generic classification symbols and letters included in the data names are omitted in processing.

With this configuration, the data names will sometimes include generic classification symbols. Many users find these classifications represented by classification symbols to be unnecessary, and since the classification symbols are not assigned by any set method, there will be problematic situations in which even though there are shared portions, it is recognized that there are none because of how the symbols are assigned. There are also letters, spaces, and the like that have the same meaning as the classification symbols. Therefore, these are omitted in the processing.

With the reproduction device of the present invention, the data is stored such that the shared portions in the data names are used as the hierarchically structured folder names, and when the data names are displayed in a list, at least the hierarchically structured folder names and the data names are displayed so as not to be overlapped, so it is easier to display portions to be distinguished, and since omitted portions are left as the folder names, everything is easy to understand and organize.

For example, the shared portions can be omitted, and just the portions to be distinguished can be displayed, by displaying program titles and omitting portions that are shared with the folder names when dividing up into folders.

Thus, rather than just omitting part of a title and forcing it to fit in the display, part of the title is used as the folder name, so even though just part of it is displayed, the original title can be understood by relating to the folder name, and since it will be recognized that the shared portions are folders, the program title display will be easy to understand, and the intended determination can be made.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A reproduction device (10) for reproducing data, the reproduction device (10) comprising:
a controller (12) configured to make display titles for the data based on portions of titles of the data other than a common part of the titles, with the common part being included between the titles; and
a display unit (17) configured to display the display titles.

2. The reproduction device (10) according to claim 1, wherein
the display unit (17) is further configured to display a group name of the data according to the common part while displaying the display titles.

3. The reproduction device (10) according to claim 1 or 2, wherein
the display unit (17) is further configured to display the display titles next to a predetermined symbol representing the common part.

4. The reproduction device (10) according to any one of claims 1 to 3, further comprising
a memory (14) configured to store the display titles in association with the common part.

5. The reproduction device (10) according to any one of claims 1 to 4, further comprising
a memory (14) configured to hierarchically store the data in a folder whose folder name is the common part.

6. The reproduction device (10) according to any one of claims 1 to 4, further comprising
a memory (14) configured to hierarchically store the data in a folder whose folder name is the common part after replacing the titles with the display titles, respectively.

7. The reproduction device (10) according to any one of claims 1 to 6, wherein
a number of hierarchical levels for hierarchically storing the data is settable while the titles have a plurality of common parts and the data is hierarchically storable with different hierarchical levels according to the plurality of common parts.

8. The reproduction device (10) according to any one of claims 1 to 7, wherein
the display unit (17) is further configured to display the titles that are made based on the common part and the display titles, respectively.

9. The reproduction device (10) according to claim 8, wherein
the display unit (17) is further configured to display the titles that are made by combining the common part with the display titles, respectively.

10. The reproduction device (10) according to any one of claims 1 to 7, wherein
the display unit (17) is further configured to display the titles that are made based on a folder name of a folder in which the data is stored and data names of the data in the folder.

11. The reproduction device (10) according to claim 10, wherein
the display unit (17) is further configured to display the titles that are made by combining the folder name of the folder with the data names, respectively.

12. The reproduction device (10) according to claim 10, wherein
the display unit (17) is further configured to display the titles that are made by canceling overlapping portions between the folder name of the folder and the data names from combinations of the folder name of the folder and the data names, respectively.

13. The reproduction device (10) according to any one of claims 1 to 12, further comprising
a memory (14) configured to store the data after replacing the titles with the display titles, respectively.

14. The reproduction device (10) according to any one of claims 1 to 13, wherein
the controller (12) is further configured to extract the common part from the titles after removing a predetermined symbol from the titles.

15. The reproduction device (10) according to any one of claims 1 to 14, wherein
the display unit (17) is further configured to display the display titles as a list.
